# EUROPÄISCHE PATENTSCHRIFT

(11) **EP 0 417 539 B1**
(45) Veröffentlichungstag und Bekanntmachung des Hinweises auf die Patenterteilung: **04.10.1995**
(21) Anmeldenummer: 90116455.8
(22) Anmeldetag: 28.08.1990
(51) Int. Cl.: C08F 8/12, C08C 19/00

(54) **Vernetzte Perlpolymerisate und ihre Herstellung**
Crosslinked bead polymers and their manufacture
Polymères réticulés en forme de perles et leur préparation

(30) Priorität: 09.09.1989 DE 3930141
(43) Veröffentlichungstag der Anmeldung: 20.03.1991
(73) Patentinhaber: BAYER AG, 51368 Leverkusen (DE)
(72) Erfinder: Podszun, Wolfgang, Dr., D-5000 Köln 80 (DE)

(56) Entgegenhaltungen:
- EP-A- 0 101 535
- FR-A- 2 430 432
- GB-A- 2 192 891
- GB-A- 2 205 846
- US-A- 3 814 716
- CHEMICAL ABSTRACTS, Band 99, Nr. 26, Dezember 1983, Seite 40, Zusammenfassung Nr. 213469r, Columbus, Ohio, US; & JP- A-58 118 803 (HITACHI CHEMICAL CO., LTD) 15-07-1983

## Beschreibung

Die vorliegende Erfindung betrifft feinteilige, vernetzte Perlpolymerisate mit enger Teilchendurchmesserverteilung sowie ein Verfahren zu ihrer Herstellung.

Feinteilige Perlpolymerisate mit enger Teilchendurchmesserverteilung sind beispielsweise auf Basis von Styrol oder Acrylsäureestern bekannt. Die Herstellung solcher weitgehend monodisperser Teilchen gelingt nach einem aufwendigen 2-Stufenverfahren (Makromol. Chem. 180 (1979), 737; Adv. Coll. Interf. Sci. 13 (1980), 101). Perlförmige Polymerisatteilchen mit relativ enger Teilchendurchmesserverteilung sind auch durch Suspensionscopolymerisation von Maleinsäureanhydrid und α-Olefinen zugänglich (DE-A-2 501 123, DE-A-2 919 822 und DE-A-3 144 793). Perlförmige Pfropfpolymerisate aus Methacrylsäure/Methylmethacrylat als Pfropfäste und Maleinsäure/α-Olefine als Pfropfgrundlage sind aus DE-A-3 331 542 bekannt. EP-A-80 225 beschreibt eine Methode zur Herstellung stabiler wäßriger Dispersionen, nach der beispielsweise Styrol- oder Methylmethacrylat-Perlpolymerisat mit enger Teilchendurchmesserverteilung zugänglich sind. Aus DE-A-3 708 032 sind fluorhaltige Perlpolymerisate mit einem mittleren Teilchendurchmesser von 0,5-10 µm und enger Teilchendurchmesserverteilung bekannt.

Solche feinteiligen Perlpolymerisate mit enger Teilchendurchmesserverteilung werden unter anderem als Mattierungsmittel oder Abstandhalter in fotografischen Aufzeichnungsmaterialien eingesetzt. Ein weiteres Anwendungsgebiet ist die Herstellung und Verarbeitung von Folien. Die Perlpolymerisate wirken dem Verkleben (Blocken) von Folienschichten entgegen; sie verbessern die Gleiteigenschaften und ermöglichen höhere Verarbeitungsgeschwindigkeiten. Ein wesentlicher Nachteil der bekannten polymeren Abstandshalter ist ihre geringe Wärmeformbeständigkeit und geringe Beständigkeit gegenüber Lösungsmitteln, wodurch ihre Anwendungsmöglichkeiten, insbesondere auf dem Foliengebiet, stark eingeschränkt sind.

Chemical Abstracts, Band 99, Nr. 26, Dez. 83, S. 40, Nr. 213 469 r beschreibt mit Si-O-Si-Gruppen vernetzte polymere Teilchen, die durch Suspensionspolymerisation hergestellt werden und demzufolge eine breite Teilchendurchmesserverteilung bei mittleren Teilchendurchmessern von 10 bis 500 µm aufweisen. Als Abstandshalter für fotografische Materialien eignen sie sich daher nicht.

Es bestand daher das Bedürfnis, polymere Abstandshalter mit verbesserter Wärmeformbeständigkeit und verbesserter Lösungsmittelbeständigkeit bereit zu stellen.

Die Erfindung betrifft mit Si-O-Si-Gruppen vernetzte Perlpolymerisate aus Vinylmonomeren mit einem mittleren Teilchendurchmesser im Bereich von 0,5 bis 7 µm, und enger Teilchendurchmesserverteilung mit einem K-Wert kleiner 0,5 enthaltend 50-99 Gew.-% polymerisierte Vinylmonomereinheiten und 1-50 Gew.-% polymerisierte Silanmonomereinheiten, die mindestens teilweise über Si-O-Si-Gruppen vernetzt sind, enthaltend bevorzugt 75-98 Gew.-% Vinylmonomereinheiten und 2-25 Gew.-% Silanmonomereinheiten, enthaltend besonders bevorzugt 85-98 Gew.-% Vinylmonomereinheiten und 2-15 Gew.-% Silanmonomereinheiten, wobei die vernetzenden Si-O-Si-Gruppen aus Silanmonomereinheiten der Formel 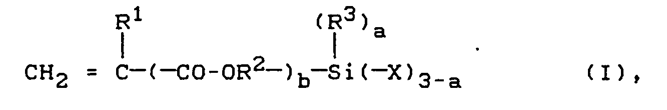
stammen, in der
- R¹: Wasserstoff oder Methyl bedeutet,
- R²: geradkettiges oder verzweigtes C₂-C₁₂-Alkylen ist, dessen Kohlenstoffkette durch -O-, -NH-, -COO- oder -NH-COO- unterbrochen sein kann,
- R³: für geradkettiges oder verzweigtes C₁-C₆-Alkyl oder Phenyl steht,
- X: eine hydrolisierbare Gruppe bedeutet,
- a: den Wert null, eins oder zwei annimmt und
- b: den Wert null oder eins annimmt,
wobei in bevorzugter Weise die vernetzenden Si-O-Si-Gruppen aus Silanmonomereinheiten der Formel 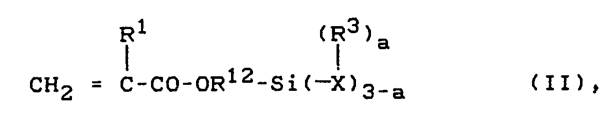
stammmen, in der
- R¹²: geradkettiges oder verzweigtes C₂-C₈-Alkylen ist, dessen Kohlenstoffkette durch -O- unterbrochen sein kann und
R¹, R³, X und a die obengenannte Bedeutung haben, und wobei in besonders bevorzugter Weise die vernetzenden Si-O-Si-Gruppen aus Silanmonomereinheiten der Formel 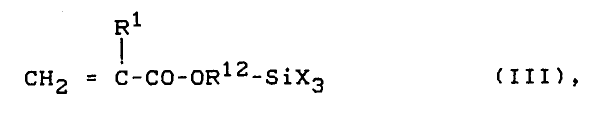
stammen, in der R¹, R¹² und X die obengenannte Bedeutung haben.

Die Polymere sind z.B. aus FR-A-2 430 432, GB-A-2 205 846, GB-A-2 192 891 und US-A-3 814 716 an sich, allerdings nicht als Perlpolymerisate bekannt.

Die Erfindung betrifft weiterhin ein Verfahren zur Herstellung vernetzter Perlpolymerisate mit einem Teilchendurchmesser von 0,5 bis 7 µm, und enger Teilchendurchmesserverteilungmit einem K-Wert kleiner 0,5, das dadurch gekennzeichnet ist, daß man 50-99 Gew.-% Vinylmonomere und 1-50 Gew.-% Silanmonomere der Formel 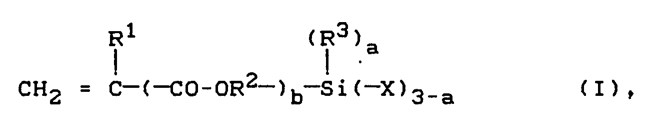
in der R¹, R², R³, X, a und b die vorstehend angegebene Bedeutung besitzen,
in einem nichtwäßrigen, polaren Medium mit Hilfe eines Radikalbildners als Initiator in Gegenwart eines in diesem Medium löslichen Polymer, das ein Molekulargewicht M_{w} von 5 · 10³ bis 5 · 10⁵ hat, in einer Menge von 0,5-15 Gew.-%, bezogen auf die Menge des polaren Mediums und in weiterer Gegenwart eines niedermolekularen Tensids in einer Menge von 0,2-5 Gew.-%, bezogen auf die Menge des Mediums, polymerisiert und das gebildete Polymerisat anschließend durch Einwirkung von wäßriger Säure oder Base bei pH -1 bis 3 bzw. 11 bis 14 vernetzt.

Geradkettiges oder verzweigtes Alkylen mit 2-12 C-Atomen ist beispielsweise Dimethylen, Trimethylen, Tetramethylen, Pentamethylen, Hexamethylen, Octamethylen, Decamethylen oder Dodecamethylen sowie 1,2-Propylen, 1,2- und 1,3-Butylen und ähnlich bekannte verzweigte Strukturen. Bei Unterbrechung der Kohlenstoffkette durch -O-, -NH-, -COO- oder -NH-COO-gelangt man in bekannter Weise in die Reihe der Polyether, Polyamine, Oligoester oder Oligourethane. In bevorzugter Weise steht anstelle von C₂-C₁₂-Alkylen ein C₂-C₈-Alkylen, dessen Kohlenstoffkette durch -O- unterbrochen sein kann.

Geradkettiges oder verzweigtes C₁-C₆-Alkyl ist beispielsweise Methyl, Ethyl, Propyl, Isopropyl, Butyl, Isobutyl, tert.-Butyl sowie die bekannten C₅- und C₆-Kohlenwasserstoffreste.

Hydrolisierbare Gruppen am Si-Atom sind dem Fachmann bekannt und umfassen beispielsweise Halogenatome, wie Fluor, Chlor oder Brom, insbesondere Chlor, Alkoxygruppen wie geradkettige oder verzweigte C₁-C₆-Alkoxy, insbesondere Methoxy oder Ethoxy, ferner Carboxylat- und Carbonamidgruppen, wie Acetat, Propionat, Acetylamino oder Propionylamino in bevorzugter Weise bedeutet X ein Chloratom oder die genannten Alkoxygruppen, in besonders bevorzugter Weise Methoxy und Ethoxy.

Der Index a zeigt an, daß am Si-Atom mindestens eine hydrolisierbare Gruppe steht, daß daneben aber noch bis zu zwei C₁-C₆-Alkylgruppen oder Phenyle am Si-Atom stehen können.

Der Index b zeigt an, daß die in (I) auf der linken Seite stehenden Vinylgruppe entweder direkt oder über die Carboxyalkylengruppe mit dem Si-Atom verbunden sein kann.

Von den Indizes a und b nimmt a in bevorzugter Weise den Wert null und b in bevorzugter Weise den Wert eins an.

Beispiel für geeignete Silanmonomerverbindungen sind:
Vinyl-trimethoxysilan, Vinyl-triethoxysilan, Vinyl-methyl-dimethoxysilan, Vinyl-methyl-diethoxysilan, γ-Methacryloyloxypropyl-trimethoxysilan, γ-Methacryloyloxypropyl-triethoxysilan, γ-Methacryloyloxypropyl-methyl-dimethoxysilan, γ-Methacryloyloxypropyl-methyl-diethoxysilan, γ-Acryloyloxypropyl-trimethoxysilan, γ-Acryloyloxypropyl-triethoxysilan, γ-Acryloyloxypropyl-methyl-dimethoxysilan und γ-Acryloyloxypropyl-methyl-diethoxysilan.

Die in die erfindungsgemäßen Perlpolymerisate zunächst einpolymerisierten Silanmonomereinheiten werden im Verlaufe der weiteren Herstellung so umgewandelt, daß die hydrolysierbaren Gruppen zumindest teilweise durch Hydrolysereaktion abgespalten werden und die entstehenden Si-OH-Gruppen durch Kondensationsreaktion zu Si-O-Si-Brücken umgewandelt werden.

Der Einsatz eines Gemisches mehrerer der genannten Silanmonomerverbindungen fällt ebenfalls unter die Erfindung.

Vinylmonomere für die erfindungsgemäßen vernetzten Perlpolymerisate sind eine oder mehrere Verbindungen aus der Gruppe der nicht substituierten oder substituierten geradkettigen, verzweigten oder cyclischen Olefine und Diolefine, der ungesättigten Carbonsäuren oder deren Derivate und der Vinylderivate von Carbonsäuren. Beispiele hierfür sind: Styrol, α-Methylstyrol, Vinyltoluol, substituierte Vinyltoluole, wie Vinylbenzylchloride, Butadien, Isobutylen, 2-Chlorbutadien, 2-Methylbutadien, Vinylpyridin, Cyclopenten, Cyclopentadien und andere; (Meth)acrylsäureester wie Ethylmethacrylat, Butylmethacrylat, Butylacrylat und Hydroxymethyl-methacrylat, Acrylnitril und andere; Vinylacetat, Vinylpropionat und andere. In bevorzugter Weise wird (werden) eines oder mehrere Vinylmonomere aus der Gruppe von Styrol und den genannten (Meth)Acrylsäureestern, besonders ein oder mehrere (Meth)Acrylsäureester eingesetzt.

Die Teilchendurchmesserverteilung läßt sich mit Hilfe des Wertes K beschreiben, der der Quotient aus dem zweiten Kumulanten und dem Quadrat des ersten Kumulanten aus der Kumulantenanalyse der Autokorrelationsfunktion des gestreuten Laserlichtes ist und ein Maß für die Verteilungsbreite der Teilchendurchmesserverteilung darstellt (J. Chem. Phys. 57 (1972) 4814-4820). Je kleiner K ist, desto enger ist die Teilchendurchmesserverteilung. Die K-Werte für die erfindungsgemäßen Perlpolymerisate betragen weniger als 0,5 und können Werte bis nahezu 0 umfassen, beispielsweise 0,001-0,5, vielfach 0,01-0,25.

Das nichtwäßrige, polare Medium zur Herstellung der erfindungsgemäßen Perlpolymerisate umfaßt eine oder mehrere Verbindungen aus der Gruppe der C₁-C₈-Alkanole, der offenkettigen oder cyclischen C₄-C₈-Ether, der C₁-C₆-Nitrile, der C₁-C₆-Säureamide, der C₃-C₆-Ester und der C₃-C₆-Ketone. Beispiele sind: Methanol, Ethanol, Propanol, i-Propanol, Butanol, i-Butanol, tert.-Butanol, Hexanol, Octanol, Diethylether, Dibutylether, Dioxan, Tetrahydrofuran, Acetonitril, Propionitril, Dimethylformamid, Methylacetat, Ethylacetat, Ethylpropionat, Aceton, Methyl-ethylketon, Methyl-tert.-butyl-keton und andere dem Fachmann bekannte Verbindungen. In bevorzugter Weise werden die genannten Alkohole oder ein Gemisch von ihnen eingesetzt, insbesondere die C₁-C₄-Alkohole. Für die Polarität des Mediums ist es ausreichend, wenn eine oder mehrere der genannten polaren Verbindungen zu mindestens 50 Gew.-% im Reaktionsmedium anwesend sind.

Der Rest, beispielsweise 0,01-50 Gew.-% des Reaktionsmediums kann aus unpolaren Kohlenwasserstoffen oder Halogenkohlenwasserstoffen, wie Hexan, Heptan, Benzol, Chlorbenzol und anderen bestehen.

Das Polymerisationsmedium ist im wesentlichen wasserfrei. Wasser in geringen Mengen, beispielsweise bis zu 5 Gew.-% des gesamten polaren Polymerisationsmediums, ist jedoch zulässig. So kann beispielsweise Ethanol in Form des technisch verfügbaren Azeotrops mit Wasser eingesetzt werden. Auch andere der genannten Lösungsmittel können in bezug auf den Wassergehalt in der Form eingesetzt werden, wie sie üblicherweise in der chemischen Technik verfügbar sind.

Die Polymerisation wird mit Hilfe eines Radikalbildners als Polymerisationsinitiator vorgenommen. Solche Radikalbildner sind dem Fachmann bekannt und umfassen insbesondere Peroxyverbindungen und Azoverbindungen. Gut geeignet ist beispielsweise Azodiisobuttersäurenitril. Solche Radikalbildner werden in einer Menge von 0,05 bis 5 %, bevorzugt 0,1 bis 2 %, bezogen auf die Gesamtmenge der Comonomeren, eingesetzt.

Die Polymerisation wird weiterhin in Gegenwart eines Polymer durchgeführt, das im Polymerisationsmedium löslich ist und das ein Molekulargewicht M_{w} von 5·10³ bis 5·10⁵, vorzugsweise 10⁴ bis 2·10⁵ hat. Dieses lösliche Polymer wird in einer Menge von 0,5-15, bevorzugt 1-10, Gew.-%, bezogen auf die Menge des Polymerisationsmediums, eingesetzt. Dieses Polymer wirkt als Dispergator und kann natürlicher oder synthetischer Herkunft sein. Beispiele hierfür sind: Cellulosederivate, wie Methylcellulose, Ethylcellulose und Hydroxypropylcellulose, Vinylacetat-Polymere wie Polyvinylacetat, Ethylen-Vinylacetat-Copolymere mit 50-90 Gew.-% Vinylacetateinheiten im Copolymer, andere Vinylacetat-Copolymere und teilverseifte Polyvinylacetate, beispielsweise mit einem Verseifungsgrad von 5-25 % aller Acetatgruppen. Weitere geeignete Polymere sind Poly-N-vinylpyrrolidon (PVP) substituiertes PVP, Poly-N-vinylcaprolactam und dessen substituierte Abkömmlinge, Copolymerisate aus PVP und Vinylcaprolactam und andere Polymere, die die Forderungen nach dem angegebenen Molekulargewicht und nach der oben angegebenen Löslichkeit erfüllen.

Zur Herstellung der erfindungsgemäß vernetzten Perlpolymerisate wird in weiterer Gegenwart eines niedermolekularen Tensids gearbeitet, das in einer Menge von 0,2-5 Gew.-%, bevorzugt 0,5-2 Gew.-%, bezogen auf das Polymerisationsmedium eingesetzt wird. Geeignete Tenside können nichtionische oder ionische Tenside, bevorzugt ionische Tenside, besonders bevorzugt kationische Tenside sein, die dem Fachmann grundsätzlich bekannt sind. Unter den vielen Tensiden seien als anionische Tenside beispielsweise die Natriumsalze von Sulfobernsteinsäureestern und als kationische Tenside N-Alkylammoniumsalze, wie Methyl-tricaprylammoniumchlorid neben anderen genannt.

Die Polymerisationstemperatur liegt im Bereich von 50-140°C. Polymerisationstemperatur und Zerfallstemperatur des Radikalbildners werden aufeinander abgestimmt. Der Druck ist für die Polymerisation grundsätzlich nicht kritisch; es wird daher bevorzugt bei Normaldruck gearbeitet. Ein höherer als der normale Druck kann sinnvoll sein, wenn in einem niedrigsiedenden Lösungsmittel bei höherer Temperatur polymerisiert werden soll. Zur Temperaturkontrolle ist es weiterhin bevorzugt, bei der Siedetemperatur des polaren Polymerisationsmediums zu arbeiten. Beim Einsatz höher siedender Reaktionsmedien kann es daher weiterhin vorteilhaft sein, unter einem etwas erniedrigten Druck zu arbeiten (Siedekühlung).

Die Polymerisationszeit beträgt einige Stunden, vielfach 2-12 Stunden und ist in bekannter Weise unter anderem abhängig von der Größe des Reaktionsansatzes.

Der Teilchendurchmesser der erfindungsgemäßen Perlpolymerisate läßt sich durch die Kombination der genannten Polymerisationsparameter steuern und kann durch einfache Vorversuche ermittelt werden. Ein wesentlicher Polymerisationsparameter ist die Polarität des Polymerisationsmediums. Es wurde festgestellt, daß die Teilchen um so feiner sind, je polarer das Lösungsmittel ist; so nimmt beispielsweise der Teilchendurchmesser in der Reihe n-Propanol, Ethanol und Methanol als verwendete Polymerisationsmedien ab. Durch Abmischen verschiedener der genannten Verbindungen für das polare Reaktionsmedium läßt sich nun stufenlos der gewünschte Teilchendurchmesser einstellen.

Nach der Beendigung der Polymerisation wird das erhaltene Polymerisat mit saurem oder alkalischem Wasser behandelt, um die Vernetzung in der oben beschriebenen Weise über Si-OH-Gruppen und deren Kondensation zu Si-O-Si-Gruppen zu bewirken. Hierzu kann saures oder alkalisches Wasser zum Polymerisationsansatz gegeben werden und nach erfolgter Vernetzung das Perlpolymerisat durch Filtration gewonnen und bei Bedarf gewaschen werden. Da das Polymerisat im Verlaufe der Polymerisation aus dem polaren, nicht-wäßrigen Polymerisationsmedium ausfällt, kann es jedoch auch in einer anderen Verfahrensvariante zunächst durch Filtration gewonnen werden, wobei das Polymerisationsmedium rezyklisiert werden kann, woraufhin in einem getrennten zweiten Schritt das abfiltrierte Polymerisat mit saurem oder alkalischem Wasser zur Vernetzung behandelt wird.

Saures bzw. alkalisches Wasser sind hierbei wäßrige Säuren oder Laugen, beispielsweise wäßrige Salzsäure oder Schwefelsäure bzw. wäßrige Natronlauge oder Kalilauge. Das saure bzw. alkalische Wasser wird in einer solchen Menge zum Polymerisationsansatz oder zum abfiltrierten Polymerisat gegeben, daß der Polymerisationsansatz bzw. die Aufschlämmung des abfiltrierten Polymerisats in diesem Wasser einen pH-Wert von -1 bis 3, bevorzugt von 0 bis 2, bzw. von 11 bis 14, bevorzugt von 12 bis 13 hat. In bevorzugter Weise wird eine saure Hydrolyse und Vernetzung vorgenommen. Die Menge des sauren bzw. alkalischen Wassers ist außer der Einstellung des genannten pH-Wertes nicht kritisch, insbesondere da die zur mindestens teilweisen Hydrolyse und Vernetzung erforderliche geringe Menge Wasser stets ausreichend vorhanden ist. Bei der Variante der Zugabe von saurem bzw. alkalischem Wasser zum Polymerisationsansatz hat sich ein Verhältnis von ca. 10 Gew.-% saurem bzw. alkalischem Wasser, bezogen auf den Polymerisationsansatz, bewährt. Die Hydrolyse und Vernetzung können bei einer Temperatur von 0-50°C, bevorzugt bei Raumtemperatur, erfolgen; als Reaktionszeit wird, hauptsächlich abhängig von der Ansatzgröße, eine Zeit von 15 Minuten bis zu einigen Stunden angesetzt.

Die Vernetzungsreaktion und der letztendlich erhaltene Vernetzungsgrad können analytisch in einfacher Weise durch Bestimmung der Löslichkeit in einem guten Lösungsmittel, beispielsweise in Tetrahydrofuran/Essigsäureethylester oder Dimethylformamid, verfolgt bzw. kontrolliert werden. Vor der Vernetzungsreaktion sind die im Polymerisationsschritt erhaltenen Perlpolymerisate leicht löslich (Gelgehalt in Tetrahydrofuran bei 25°C im allgemeinen unter 5 %), während die Perlpolymerisate nach der Vernetzungsreaktion unlöslich sind (Gelgehalt in Tetrahydrofuran bei 25°C größer als 90 %). Die Form, Größe und Teilchendurchmesserverteilung des Perlpolymerisats werden bei der Vernetzungsreaktion nicht verändert.

Die erfindungsgemäßen Perlpolymerisate haben gegenüber den bekannten unvernetzten Perlpolymerisaten eine entscheidend verbesserte Lösungsmittelbeständigkeit und Wärmeformbeständigkeit.

### Beispiel 1

In einem Reaktionskolben mit Rückflußkühler, Rührer und Thermometer wurden 28 g Polyvinylpyrrolidon, 4 g Methyltricaprylammoniumchlorid und 0,32 g Azodiisobutyronitril in 800 ml Methanol gelöst. Zu der Lösung wurden 50 g eines Monomergemisches aus 47,5 g Methylmethacrylat und 2,5 g γ-Methacryloyloxypropyl-trimethoxysilan gegeben. Das Gemisch wurde unter Rühren 5 Stunden am Rückfluß erhitzt. Anschließend wurde auf 25°C abgekühlt, und innerhalb von 30 Minuten wurden 50 ml 1n-HCl zugetropft. Es wurde noch 1 weitere Stunde bei 25°C gerührt, anschließend wurde das Perlpolymerisat durch Zentrifugieren isoliert, mit Methanol gewaschen und bei 50°C im Vakuum getrocknet.

Ausbeute: 31 g;
in THF unlöslicher Anteil: 97,5 %;
mittlere Teilchengröße: 4,5 µm, K = 0,15
(gemessen mittels Laser-Streulicht-Spektroskopie)

### Beispiel 2

Beispiel 1 wurde wiederholt, wobei Gemische aus Methylmethacrylat und γ-Methacryloyloxypropyltrimethoxysilan (γ-MAPTMOS) in den unten angeführten Mengen eingesetzt wurden

| Nr. | Methylmethacrylat g | γ-MAPTMOS g | Ausbeute [g] | unlösl. Anteil [%] | ⌀ [µm] |
|---|---|---|---|---|---|
| A | 48,75 | 1,25 | 34 | 76 | 3,8 |
| B | 45 | 5 | 35 | 98 | 4,0 |
| C | 40 | 10 | 32 | 100 | 3,9 |
| D | 35 | 15 | 30 | 100 | 4,3 |

### Beispiel 3

Entsprechend der in Beispiel 1 angegebenen Arbeitsweise wurden zu einer Lösung von 75,6 g Polyvinylpyrrolidon, 10,8 g Methyltricaprylammoniumchlorid und 0,91 g Azodiisobutyronitril in 2.160 ml des unten angegebenen Lösungsmittels 135 g Methylmethacrylat und 6,75 g γ-Methacryloyloxypropyltrimethoxysilan gegeben und umgesetzt. Nach der Polymerisation wurden innerhalb von 60 Minuten 135 ml 1n-HCl zugetropft.

| Nr. | Lösungsmittel | Ausbeute [g] | ⌀ [µm] | K |
|---|---|---|---|---|
| A | Methanol | 80 g | 3,8 | 0,08 |
| B | Methanol/Ethanol (1:1) | 81 g | 5,3 | 0,17 |
| C | Ethanol | 78 g | 6,5 | 0,22 |
| D | Ethanol/Isopropanol (1:1) | 72 g | 7,4 | 0,64 |

## Patentansprüche

1. Mit Si-O-Si-Gruppen vernetzte Perlpolymerisate aus Vinylmonomeren mit einem mittleren Teilchendurchmesser im Bereich von 0,5 - 7 µm und enger Teilchendurchmesserverteilllng mit einem K-Wert kleiner 0,5 enthaltend 50-99 Gew.-% polymerisierte Vinylmonomereinheiten und 1-50 Gew.-% polymerisierte Silanmonomereinheiten, die mindestens teilweise über Si-O-Si-Gruppen vernetzt sind, enthaltend bevorzugt 75-98 Gew.-% Vinylmonomereinheiten und 2-25 Gew .-% Silanmonomereinheiten, enthaltend besonders bevorzugt 85-98 Gew.-% Vinylmonomereinheiten und 2-15 Gew.-% Silanmonomereinheiten, wobei die vernetzenden Si-O-Si-Gruppen aus Silanmonomereinheiten der Formel 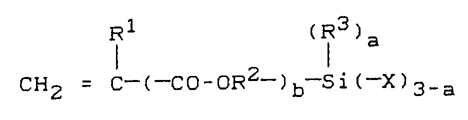 stammen, in der
R¹ Wasserstoff oder Methyl bedeutet,
R² geradkettiges oder verzweigtes C₂-C₁₂-Alkylen ist, dessen Kohlenstoffkette durch -O-, -NH-, -COO- oder -NH-COO- unterbrochen sein kann,
R³ für geradkettiges oder verzweigtes C₁-C₆-Alkyl oder Phenyl steht,
X eine hydrolisierbare Gruppe bedeutet,
a den Wert null, eins oder zwei annimmt und
b den Wert null oder eins annimmt,
wobei in bevorzugter Weise die vernetzenden Si-O-Si-Gruppen aus Silanmonomereinheiten der Formel 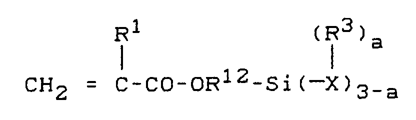 stammen, in der
R¹² geradkettiges oder verzweigtes C₂-C₈-Alkylen ist, dessen Kohlenstoffkette durch -O- unterbrochen sein kann und
R¹, R³, X und a die genannte Bedeutung haben,
und wobei in besonders bevorzugter Weise die vernetzenden Si-O-Si-Gruppen aus Silanmonomereinheiten der Formel 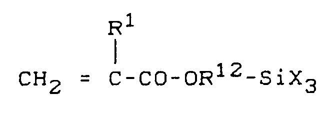 stammen, in der
R¹, R¹² und X die genannte Bedeutung haben.

2. Vernetzte Perlpolymerisate nach Anspruch 1, dadurch gekennzeichnet, daß die hydrolysierbare Gruppe ein Halogenatom, eine geradkettige oder verzweigte C₁-C₆-Alkoxygruppe, eine Carboxylat- oder eine Carbonamidgruppe, bevorzugt ein Chloratom oder geradkettiges oder verzweigtes C₁-C₆-Alkoxy, besonders bevorzugt Methoxy oder Ethoxy ist.

3. Vernetzte Perlpolymerisate nach Anspruch 1, dadurch gekennzeichnet, daß das Vinylmonomer eines oder mehrere aus der Gruppe der nicht substituierten oder substituierten, geradkettigen, verzweigten oder cyclischen Olefine und Diolefine, der ungesättigten Carbonsäuren oder deren Derivate und der Vinylderivate von Carbonsäuren, bevorzugt eines oder mehrer aus der Gruppe von Styrol und Methacrylsäureester, besonders bevorzugt ein oder mehrere Methacrylsäureester ist (sind).

4. Verfahren zur Herstellung vernetzter Perlpolymerisate mit einem Teilchendurchmesser von 0,5-7 µm, und enger Teilchengrößenverteilung mit einem K-Wert kleiner 0,5, dadurch gekennzeichnet, daß man 50-99 Gew.-% Vinylmonomere und 1-50 Gew.-% Silanmonomere der Formel 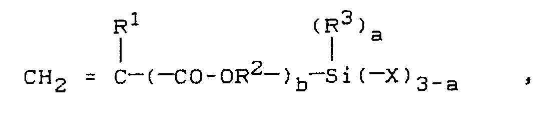 in der
R¹ Wasserstoff oder Methyl bedeutet,
R² geradkettiges oder verzweigtes C₂-C₁₂-Alkylen ist, dessen Kohlenstoffkette durch -O-, -NH-, -COO- oder -NH-COO- unterbrochen sein kann,
R³ für geradkettiges oder verzweigtes C₁-C₆-Alkyl oder Phenyl steht,
X eine hydrolisierbare Gruppe bedeutet,
a den Wert null, eins oder zwei annimmt und
b den Wert null oder eins annimmt,
in einem nichtwäßrigen, polaren Medium mit Hilfe eines Radikalbildners als Initiator in Gegenwart eines in diesem Medium löslichen Polymer, das ein Molekulargewicht M_{w} von 5·10³ bis 5·10⁵ hat, in einer Menge von 0,5-15 Gew.-%, bezogen auf die Menge des Mediums, und in weiterer Gegenwart eines niedermolekularen Tensids in einer Menge von 0,2-5 Gew.-%, bezogen auf die Menge des Mediums, polymerisiert und das gebildete Polymerisat anschließend durch Einwirkung von wäßriger Säure oder Base bei pH -1 bis 3 bzw. 11 bis 14 vernetzt.

5. Verfahren nach Anspruch 4, dadurch gekennzeichnet, daß als nichtwäßriges, polares Medium ein C₁-C₈-Alkanol, ein offenkettiger oder cyclischer C₄-C₈-Ether, ein C₁-C₆-Nitril, ein C₁-C₆-Säureamid, ein C₃-C₆-Ester, ein C₃-C₆-Keton und ein Gemisch mehrerer von ihnen eingesetzt wird, wobei ein solches Medium bis zu 50 % des Gesamtgewichts an unpolaren Kohlenwasserstoffen oder Halogenkohlenwasserstoffen enthalten kann.

6. Verfahren nach Anspruch 4, dadurch gekennzeichnet, daß ein nichtionisches oder ionisches Tensid, bevorzugt ein ionisches Tensid, besonders bevorzugt ein kationisches Tensid, eingesetzt wird.

7. Verfahren nach Anspruch 4, dadurch gekennzeichnet, daß das im nichtwäßrigen, polaren Medium lösliche Polymer ein Cellulosederivat oder ein Vinylacetat-Polymer ist.

## Claims

1. Pearl polymers crosslinked with Si-O-Si groups and comprising vinyl monomers having an average particle diameter in the range of 0.5 - 7 µm and a narrow particle diameter distribution with a K value less than 0.5, containing 50-99 % by weight of polymerised vinyl monomer units and 1-50 % by weight of polymerised silane monomer units which are at least partially crosslinked via Si-O-Si groups, preferably containing 75-98 % by weight of vinyl monomer units and 2-25 % by weight of silane monomer units, most preferably containing 85-98 % by weight of vinyl monomer units and 2-15 % by weight of silane monomer units, wherein the crosslinking Si-O-Si groups originate from silane monomer units of formula 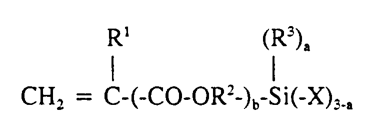 where
R¹ represents hydrogen or methyl,
R² is a straight chain or branched C₂-C₁₂- alkylene, the carbon chain of which may be interrupted by -O-, -NH-, -COO- or-NHCOO-,
R³ represents a straight chain or branched C₁-C₆-alkyl, or phenyl,
X represents a hydrolysable group,
a assumes the value zero, one or two, and
b assumes the value zero or one,
wherein the crosslinking Si-O-Si groups preferably originate from silane monomer units of formula 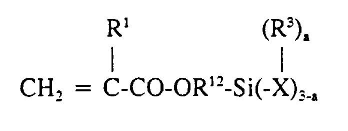 where
R¹² is a straight chain or branched C₂-C₈-alkylene, the carbon chain of which may be interrupted by -O-, and
R¹, R³, X and a have the said meaning,
and wherein the crosslinking Si-O-Si groups most preferably originate from silane monomer units of formula 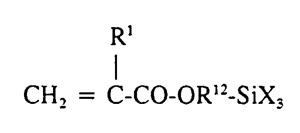 where
R¹, R¹² and X have the said meaning.

2. Crosslinked pearl polymers according to claim 1, characterised in that the hydrolysable group is a halogen atom, a straight chain or branched C₁-C₆-alkoxy group, a carboxylate or carbonamide group, preferably a chlorine atom or a straight chain or branched C₁-C₆-alkoxy, most preferably methoxy or ethoxy.

3. Crosslinked pearl polymers according to claim 1, characterised in that the vinyl monomer is one or more from the group comprising non-substituted or substituted, straight chain, branched or cyclic olefines and diolefines, unsaturated carboxylic acids or their derivatives, and the vinyl derivatives of carboxylic acids, preferably one or more from the group comprising styrene and methacrylic acid esters, most preferably one or more methacrylic acid esters.

4. A method of producing crosslinked pearl polymers having an average particle diameter of 0.5 - 7 µm and a narrow particle diameter distribution, with a K value less than 0.5, characterised in that 50-99 % by weight of vinyl monomers and 1-50 % by weight of silane monomers of formula 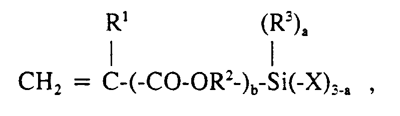 where
R¹ represents hydrogen or methyl,
R² is a straight chain or branched C₂-C₁₂- alkylene, the carbon chain of which may be interrupted by -O-, -NH-, -COO- or-NHCOO-,
R³ represents a straight chain or branched C₁-C₆-alkyl, or phenyl,
X represents a hydrolysable group,
a assumes the value zero, one or two, and
b assumes the value zero or one,
are polymerised in a non-aqueous, polar medium with the aid of a radical former as initiator, in the presence of a polymer which is soluble in this medium and which has a molecular weight M_{w} of 5.10³ to 5.10⁵, in an amount of 0.5-15 % by weight based on the amount of medium, and in the presence in addition of a low molecular weight surfactant in an amount of 0.2-5 % by weight based on the amount of medium, and the polymer formed is subsequently crosslinked by the action of an aqueous acid or base at a pH of 1 to 3 or 11 to 14, respectively.

5. A method according to claim 4, characterised in that a C₁-C₈ alkanol, an open chain or cyclic C₄-C₈ ether, a C₁-C₆ nitrile, a C₁-C₆ acid amide, a C₃-C₆ ester, a C₃-C₆ ketone and a mixture of a plurality thereof is used as the non-aqueous polar medium, wherein such a medium may contain up to 50 % of its total weight of non-polar hydrocarbons or halogenated hydrocarbons.

6. A method according to claim 4, characterised in that a non-ionic or ionic surfactant, preferably an ionic surfactant, most preferably a cationic surfactant, is used.

7. A method according to claim 4, characterised in that the polymer which is soluble in the non-aqueous medium is a cellulose derivative or a vinyl acetate polymer.

## Revendications

1. Polymères en ailes de monomères vinyliques, réticulés par des groupes Si-O-Si, à un diamètre de particule moyen dans l'intervalle de 0,5 à 7 µm et une répartition étroite des diamètres de particules correspondant à une valeur K inférieure à 0,5, contenant 50 à 99% en poids de motifs de monomères vinyliques polymérisés et de 1 à 50 % en poids de motifs de monomères de silanes polymérisés, réticulés en partie au moins par des groupes Si-O-Si, de préférence 75 à 98 % en poids de motifs de monomères vinyliques et de 2 à 25 % en poids de motifs de monomères de silanes et dans les meilleures conditions de 85 à 98 % en poids de motifs de monomères vinyliques et de 2 à 15 % en poids de motifs de monomères de silanes, les groupes réticulants Si-O-Si dérivant de motifs de monomères de silanes de formule : 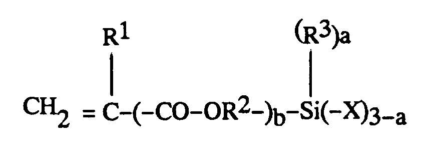 dans laquelle
R¹ représente l'hydrogène ou un groupe méthyle,
R² représente un groupe alkylène à chaîne droite ou ramifiée en C₂-C₁₂ dont la chaine carbonée peut être interrompue par -O-, -NH-, -COO- ou -NHCOO-,
R³ représente un groupe alkyle à chaîne droite ou ramifiée en C₁-C₆ ou un groupe phényle,
X représente un groupe hydrolysable,
a est égal à zéro, un ou deux, et
b est égal à zéro ou un,
les groupes réticulants Si-O-Si- dérivant de préférence de motifs monomères de silanes de formule : 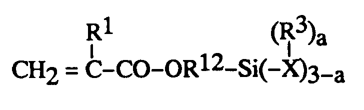 dans laquelle
R¹² représente un groupe alkylène à chaîne droite ou ramifiée en C₂-C₈ dont la chaîne carbonée peut être interrompue par -O- et
R₁, R₃, X et a ont les significations indiquées ci-dessus, et plus spécialement, les groupes réticulants Si-O-Si dérivant de motifs monomères de silanes de formule : 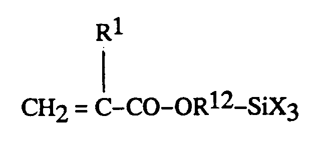 dans laquelle R¹, R¹² et X ont les significations indiquées ci-dessus.

2. Polymères en perles réticulés selon la revendication 1, caractérisés en ce que le groupe hydrolysable consiste en fait en un atome d'halogène, un groupe alcoxy à chaîne droite ou ramifiée en C₁-C₆, un groupe carboxylate ou un groupe carboxamide, de préférence en un atome de chlore ou en un groupe alcoxy à chaîne droite ou ramifiée en C₁-C₆ et plus spécialement en un groupe méthoxy ou éthoxy.

3. Polymères en perles réticulés selon la revendication 1, caractérisés en ce que le monomère vinylique consiste en fait en un ou plusieurs composés pris dans le groupe des oléfines et dioléfines à chaîne droite, ramifiée ou cyclique, non substituées ou substituées, des acides carboxyliques insaturés ou leurs dérivés et des dérivés vinyliques des acides carboxyliques, et de préférence en un ou plusieurs composés du groupe formé par le styrène et les esters méthacryliques, et plus spécialement en un ou plusieurs esters méthacryliques.

4. Procédé de préparation de polymères en perles réticulés à un diamètre de particule de 0,5 à 7 µm et à répartition étroite des dimensions de particules correspondant à une valeur K inférieure à 0,5, caractérisé en ce que l'on polymérise de 50 à 99 % en poids de monomères vinyliques et de 1 à 50 % en poids de silanes monomères de formule : 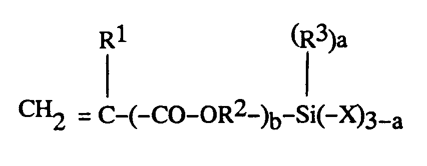 dans laquelle
R¹ représente l'hydrogène ou un groupe méthyle,
R² représente un groupe alkylène à chaîne droite ou ramifiée en C₂-C₁₂ dont la chaine carbonée peut être interrompue par -O-, -NH-, -COO- ou -NHCOO-,
R³ représente un groupe alkyle à chaîne droite ou ramifiée en C₁-C₆ ou un groupe phényle,
X représente un groupe hydrolysable,
a est égal à zéro, un ou deux, et
b est égal à zéro ou un,
dans un milieu polaire non aqueux à l'aide d'un inducteur radicalaire en présence d'un polymère soluble dans ce milieu et qui a un poids moléculaire M_{w} de 5 x 10³ à 5 x 10⁵, en quantité de 0,5 à 15 % du poids du milieu, et en présence également d'un agent tensioactif à bas poids moléculaire en quantité de 0,2 à 5 % du poids du milieu, après quoi on réticule le polymère formé sous l'action d'un acide aqueux ou d'une base aqueuse à des pH respectifs de -1 à 3 et de 11 à 14.

5. Procédé selon revendication 4, caractérisé en ce que l'on utilise en tant que milieu polaire non aqueux un alcanol en C₁-C₈, un éther acyclique ou cyclique en C₄-C₈, un nitrile en C₁-C₆, un amide en C₁-C₆, un ester en C₃-C₆, une cétone en C₃-C₆ ou un mélange de plusieurs de ces solvants, le milieu en question pouvant contenir des hydrocarbures ou des hydrocarbures halogénés non polaires en proportions allant jusqu'à 50 % de son poids total.

6. Procédé selon revendication 4, caractérisé en ce que l'on utilise un agent tensioactif non ionique ou ionique, de préférence ionique, et dans les meilleures conditions cationique.

7. Procédé selon revendication 4, caractérisé en ce que le polymère soluble dans le milieu polaire non aqueux est un dérivé de la cellulose ou un polymère de l'acétate de vinyle.
